# EUROPÄISCHE PATENTANMELDUNG

(11) **EP 2 433 690 A1**
(43) Veröffentlichungstag der Anmeldung: **28.03.2012**
(21) Anmeldenummer: 11401599.3
(22) Anmeldetag: 27.09.2011
(51) Int. Cl.: B01D 17/02, B01D 21/24

(54) **Fettabscheider**

(30) Priorität: 27.09.2010 DE 212010008635 U
(71) Anmelder: Gryxa, Reinhold, 80335 München (DE)
(72) Erfinder: Gryxa, Reinhold, 80335 München (DE)
(74) Vertreter: Mischung, Ralf

(57) **Zusammenfassung**

Fettabscheider zur Trennung von Schwerstoffen und/oder Leichtstoffen aus einer wässrigen Substanz, wobei zwischen einer Einlaufzone und einer Auslaufzone ein Hubkasten absenkbar oder anhebbar angeordnet ist, der bei der Entnahme sowohl abgesetzte Schwerstoffe als auch aufschwimmende Leichtstoffe gleichzeitig aus der Wanne austrägt.

## Beschreibung

Die vorliegende Erfindung betrifft einen Fettabscheider nach dem Oberbegriff des Anspruchs 1.

Fettabscheider sind unter anderem aus der Lebensmitteltechnologie bekannt. Gerade in der Gastronomie besteht häufig das Erfordernis, fettige Bestandteile aus Abwässern herauszutrennen, bevor diese in die Kanalisation gelangen. Derartige Fettabscheider sind meist ausgebildet zur Aufnahme von Schwerstoffen, welche im Schmutzwasser zu Boden sinken und von Leichtstoffen, welche auf dem Schmutzwasser aufschwimmen. So ist beispielsweise ein Fettabscheider bekannt, der hinter einer Einlaufzone einen Schlammkorb aufweist, in dem die Schwerstoffe herabsinken, und der seitlich wasserdurchlässig ist. In Strömungsrichtung seitlich angrenzend an den Schlammkorb ist eine Abscheidezone für die Ansammlung der Leichtstoffe auf der Wasseroberfläche vorgesehen. Nachdem das Wasser den Schlammkorb und die daran anschließende Abscheidezone durchströmt hat, ist es von Leicht- und Schwerstoffen weitgehend gereinigt und wird aus dem Fettabscheider abgeführt. Zur Reinigung kann der Schlammkorb vertikal nach oben aus dem Fettabscheider herausgezogen werden. Die in der angrenzenden Abscheidezone angesammelten, aufschwimmenden Leichtstoffe, die sich oft zu einer zusammenhängenden und Millimeter bis Zentimeter dicken Fettschicht aufbauen, können aus dem Wasser abgeschöpft werden.

Bekannt sind weiterhin Fettabscheider, bei denen angrenzend an eine Einlaufzone die Leichtstoffe auf dem Schmutzwasser aufschwimmen, während sich die Schwerstoffe unterhalb der Leichtstoffe auf dem Boden des Behälters absetzen. Der Bereich zur Ansammlung der Leichtstoffe wird dabei durch zwei Tauchbleche in Strömungsrichtung begrenzt und der Behälter mit Schmutzwasser so weit angefüllt, dass der Wasserspiegel oberhalb der Unterkanten der Tauchbleche liegt. Zugleich kann das Wasser aus der Einlaufzone in die Abscheidezone bzw. aus der Abscheidezone in die Auslaufzone nur gelangen, indem es unter den Tauchblechen hindurchströmt. Auf diese Weise können bei ausreichender Dimensionierung bzw. gering genug gewählter Strömungsgeschwindigkeit Leichtstoffe zwischen den beiden Tauchblechen aufschwimmen, so dass sie die Tauchbleche nicht passieren und nicht ins Abwasser gelangen können. Entlang des Strömungsweges des Wassers können Schwerstoffe zugleich auf den Boden des Abscheiders absinken, so dass insgesamt weitgehend gereinigtes Wasser unter dem zweiten Tauchblech hindurch in die Ablaufzone strömen und dort abgeführt werden kann. Die Reinigung dieses Fettabscheiders erfolgt, indem zunächst die oben aufschwimmende Fettschicht abgeschöpft wird. Die auf dem Boden abgesetzte Schlammschicht kann (evtl. nach vorheriger Entnahme des oberhalb der Schlammschicht anstehenden Wassers) vom Bodenbereich abgeschabt bzw. ausgeschöpft oder ausgekratzt werden.

Die bekannten Fettabscheider haben den Nachteil, dass ihre Reinigung umständlich und langwierig ist. Aufgabe der Erfindung war es daher, einen Fettabscheider anzubieten, der gegenüber dem Stand der Technik deutlich einfacher zu reinigen ist.

Die Aufgabe wird gelöst durch einen Fettabscheider nach Anspruch 1.

Dem erfindungsgemäßen Fettabscheider liegt die Idee zugrunde, einen in das Becken absenkbaren Hubkasten vorzusehen, der bei seiner Entnahme sowohl die nach unten abgesetzten Schwerstoffe als auch die oben aufschwimmenden Leichtstoffe aus dem Fettabscheider austrägt. Auf diese Weise wird quasi mit einem Handgriff sowohl das aufschwimmende Fett als auch der aus den herabgesunkenen Schwerstoffen gebildete Schlamm gleichzeitig aus dem Abscheider entnommen, was dessen Reinigung erheblich vereinfacht. Darüber hinaus beseitigt der erfindungsgemäße Hubkasten auch das aus dem Stand der Technik bekannte Erfordernis, den Schlamm vom Boden des Fettabscheiders abzuschaben oder abzusaugen, während sich zugleich auch das Abschöpfen der aus den Leichtstoffen gebildeten aufschwimmenden Fettschicht erübrigt, da auch diese gemeinsam mit dem Hubkasten komplett aus dem Fettabscheider herausgehoben wird. Die mit dem Hubkasten aus dem Fettabscheider herausgehobenen Schwerstoffe und Leichtstoffe können so separat vom Abscheidergehäuse bzw. an einem anderen Ort aus dem Hubkasten entfernt werden, was bei den räumlich beengt eingebauten Fettabscheidern sehr vorteilhaft ist. Während der Grundkörper des Fettabscheiders ortsfest verbleiben kann und keiner weiteren besonderen Reinigung zu unterziehen ist, gestattet der erfindungsgemäße Hubkasten die eigentliche Reinigung also auch außerhalb des Fettabscheiders. In dem im Grunde mobilen Hubkasten sind die zu entfernenden Fettbestandteile dabei leichter und von mehreren Seiten zu erreichen, was die Reinigung zusätzlich vereinfacht und beschleunigt. Der von Fettbestandteilen befreite Hubkasten kann anschließend wieder in den Fettabscheider abgesenkt werden.

Als weiterer Vorteil ergibt sich, dass das verschmutzte Wasser aus dem Fettabscheider zur Entnahme des Hubkastens und damit zur Entnahme von Schwer- und Leichtstoffen nicht entfernt werden muss. Stattdessen werden die am Boden als Schlamm angesammelten Schwerstoffe durch das Schmutzwasser nach oben angehoben. Während der Aufwärtsbewegung des Hubkastens wird das zwischen unterer Schlammschicht und oben aufschwimmender Fettschicht vorhandene Wasser seitlich herausgedrängt, so dass schließlich die obere Fettschicht unmittelbare auf der Schlammschicht zu liegen kommt. Beim weiteren Anheben des Hubkastens verlässt dieser schließlich den vom Schmutzwasser beaufschlagten Bereich des Fettabscheiders und nimmt Schlammschicht und Fettschicht mit heraus.

Der zur Trennung von Schwerstoffen und Leichtstoffen ausgebildete Fettabscheider umfasst erfindungsgemäß ein Becken, welches sich in einer vertikalen Höhenrichtung nach oben erstreckt. Das Becken kann an seiner Oberseite temporär verschließbar sein. Es weist eine Einlaufzone auf, in die die zu reinigende wässrige Substanz durch einen Einlauf einströmt. Weiterhin umfasst das Becken eine Auslaufzone, aus der die gereinigte wässrige Substanz durch einen Auslauf ausströmt.

Einlaufzone und Auslaufzone sind in horizontaler Richtung durch eine Abscheidezone Fettzone voneinander getrennt, wobei die Abscheidezone in ihrem oberen Bereich eine Fettzone und darunter liegend eine Schlammzone aufweist, und wobei Fettzone und Schlammzone im Betrieb durch eine Schmutzwasser-führende Schicht vertikal beabstandet sind. Die Fettzone dient zur Ansammlung aufschwimmender Leichtstoffe und ist von der Einlaufzone bzw. von der Auslaufzone jeweils durch eine Auslauftauchwand abgegrenzt. Zweckmäßigerweise ragt jede Tauchwand so weit über den Wasserspiegel nach oben hinaus, dass die zwischen den Tauchwänden anfallende Ansammlung aufschwimmender Leichtstoffe nicht über die Oberkanten der Tauchwände hinausragt. Weiterhin haben die Tauchwände den Zweck, das Wasser auf seinem Weg von der Einlaufzone in die Auslaufzone in eine Tiefe zu führen, die jedenfalls unterhalb der Wasseroberfläche bzw. der in der Fettzone angesammelten Fettschicht liegt. Entsprechend reichen die Tauchbleche tiefer ins Wasser als die zwischen beiden Tauchwänden zu erwartende Fettschicht.

Während die Fettzone zwischen den beiden Tauchblechen und im Wesentlichen im Bereich des Wasserspiegels definiert ist, soll vertikal unterhalb der Fettzone und vorzugsweise deckungsgleich zu ihr eine Schlammzone zur Ansammlung absinkender Schwerstoffe vorgesehen sein. Die Schlammzone bildet den Bereich, in dem sich aus dem verschmutzten Wasser herabsinkende Schwerstoffe ansammeln. Entsprechend liegt die Schlammzone in Bodennähe des Beckens.

Die Erfindung wird gekennzeichnet durch einen in das Becken absenkbaren Hubkasten, der zur Entnahme der in der Schlammzone und/oder der Fettzone angesammelten Schwer-und/oder Leichtstoffe aus dem Becken nach oben herausnehmbar ist. Der Hubkasten umfasst im Wesentlichen eine nach oben offene Wanne, die im eingesetzten Zustand in der Schlammzone zu liegen kommt und diese seitlich und von unten umfasst. Das Füllvolumen der Wanne entspricht der maximal aufnehmbaren Schlammmenge und wird limitiert durch wenigstens einen niedrigsten Wannenrand, der im eingesetzten Zustand zweckmäßigerweise an die Auslaufzone angrenzt.

Vorzugsweise umfasst der Hubkasten einen mit der Wanne verbundenen Griff, der nach oben aus dem Becken herausragt. Durch einfaches vertikales Herausziehen des Hubkastens wird zunächst die Wanne mit dem darin angesammelte Schlamm nach oben gehoben. Oberhalb der Wanne befindet sich dabei zunächst verschmutztes Wasser, oberhalb dessen wiederum die in der Fettzone zwischen den beiden Tauchblechen aufschwimmenden Leichtstoffe liegen. In weiterer Aufwärtsbewegung des Hubkastens wird das zwischen Fettschicht und Schlammschicht liegende verschmutzte Wasser seitlich herausgedrängt, während sich die Schlammschicht auf die im Wesentlichen noch ortsfeste Fettschicht vertikal nach oben zu bewegt. Unter weitergehender Verdrängung des dazwischen liegenden Wassers erreicht schließlich die Wanne mit dem darin liegenden Schlamm die Unterseite der Fettschicht, so dass bei weiterer Aufwärtsbewegung der Schlamm mitsamt der Fettschicht nach oben aus dem Becken herausgehoben werden kann. Auf besonders einfache Weise wird dadurch die Reinigung eines Fettabscheiders ermöglicht, ohne dass aus dem Becken die Schlammschicht oder die Fettschicht manuell durch Abschöpfen oder Ausschaben oder ähnliches zu entfernen wäre.

Eine weitere vorteilhafte Ausführungsform der Erfindung sieht Lenkmittel vor, die eine seitliche Bewegung der Leichtstoffe während der Entnahme des Hubkastens behindern bzw. vermeiden. Hintergrund ist die Überlegung, dass die Fettschicht, während sie bereits auf der Schlammschicht aufliegt, seitlich von der die Schlammschicht aufnehmenden Wanne herabgleiten und dabei beispielsweise in die Auslaufzonen gelangen könnte. Dies soll vermieden werden. Eine Vergrößerung des Wannenvolumens, etwa durch eine höhere umlaufende Wandung, scheidet jedoch als Lösung aus, da die Fettschicht stets auf Höhe des maximalen Füllstandes der Wanne aufschwimmen wird und der Einschluss von Wasser zwischen den Schichten bei der Entnahme vermieden werden soll.

Eine erfindungsgemäße Lösung sieht daher vor, dass die Lenkmittel zumindest im Bereich des niedrigsten Wannenrandes als zusätzliche seitliche Berandung so an der Wanne angeordnet sind, so dass sich das Füllvolumen der Wanne für die zusätzliche Aufnahme von Leichtstoffen einerseits erhöht, andererseits aber zwischen den Schichten liegendes Wasser gleichwohl ablaufen kann. Dazu bilden die Lenkmittel zumindest im Bereich des niedrigsten Wannenrandes eine Barriere für die Fettschicht gegen seitliches Verrutschen, die zugleich jedoch den Austritt von zwischen den Schichten liegendem Schutzwasser gestattet. Die Lenkmittel erstrecken sich dabei aufwärts bis auf eine Oberkantenhöhe oberhalb des niedrigsten Wannenrandes, wobei die Differenz zwischen Oberkantenhöhe der Lenkmittel und Oberkante des niedrigsten Wannenrandes ein zusätzliches Aufnahmevolumen für die Fettschicht oberhalb der Schlammschicht in der Wanne definieren. Zugleich gestatten die Lenkmittel die Strömung von Wasser aus der vergrößerten Wanne heraus in die Auslaufzone unterhalb der Oberkantenhöhe.

In einer einfachsten Ausführungsform beispielsweise könnten die Lenkmittel eine Gitterstruktur haben, die die zusammenhängende Fettschicht zurückhält, das Wasser jedoch nicht. Eine besonders ausgereifte Variante sieht dagegen vor, mit Hilfe der an sich undurchlässigen Lenkmittel eine wasserdurchlässige Siphonöffnung auszubilden. In diesem Fall ragen die Lenkmittel - ausgehend von der Oberkantenhöhe - mit ihrer Unterkante bis auf eine Höhe unterhalb des niedrigsten Wannenrandes und leicht beabstandet zu diesem in die Wanne herab und sind bspw. als Blechstreifen ausgebildet. Gemeinsam mit den anderen Wannenrändern bilden die Lenkmittel wieder ein zusätzliches Volumen für die Aufnahme der Fettschicht. Schmutzwasser, welches bei der Entnahme der Wanne im Bereich zwischen Fettschicht und Schlammschicht innerhalb dieses zusätzlichen Volumens eingesperrt wird, gelangt dann durch die Siphon-Verbindung unter der Unterkante des Blechstreifens hindurch in den Bereich des niedrigsten Wannenrandes und von dort über diesen hinweg in den Bereich außerhalb der Wanne bzw. in die Ablaufzone.

Diese Variante hat den besonderen Vorteil, dass die auf die Wanne herabsinkende Fettschicht (bei reiner Betrachtung der Relativbewegungen beider Schichten) besonders gut und sicher durch das zusätzlich gebildete Wannenvolumen aufgefangen wird. Zwischen beiden Schichten noch zu verdrängendes Schmutzwasser wird dabei im Bereich der Lenkmittel nicht horizontal nach außen verdrängt, sondern der Siphongestaltung folgend zunächst nach unten und dann unter den Lenkmitteln hindurch. Der Abwärtsbewegung kann die Fettschicht - auf der geringer werdenden Wassermenge schwimmend - folgen, während sie an einer seitlichen Bewegung durch die Lenkmittel gehindert wird. Dadurch wird besonders effektiv verhindert, dass Teile der Fettschicht unerwünscht in horizontaler Richtung gemeinsam mit dem verdrängten Wasser in die Auslaufzone ausgeschwemmt werden. Vielmehr dienen die Lenkmittel, die sich beispielsweise in Form eines geneigten Blechstreifens über die gesamte Breite der Wanne erstrecken können, als undurchlässige seitliche Barriere für die auf der Schlammschicht aufschwimmenden Partikel der Fettschicht.

Als zweckmäßig hat sich auch eine Variante herausgestellt, bei der sich ein der Auslaufzone zugewandtes Lenkmittel von einem Niveau unterhalb des niedrigsten Wannenrandes bis oberhalb der Eintauchtiefe der Auslauftauchwand erstreckt, um einen Schutz gegen ungewollten Austritt von Fett oder Schlamm in die Auslaufzone zu verhindern. Damit bildet das Lenkmittel (bsp. als Blechstreifen) eine seitliche Begrenzung, die im eingesetzten Zustand der Wanne den horizontalen Weg zwischen dem untersten Wannenrand und der Unterkante der Auslauftauchwand aus der Fett- oder Schlammzone in die Auslaufzone versperrt. Abgesehen von fertigungsbedingten Toleranzen kann Flüssigkeit dann nur durch die Siphonverbindung in die Auslaufzone gelangen, was den ungewollten Übertritt insbesondere von Fett in die Auslaufzone vorteilhaft erschwert oder gar verhindert.

Ein weitere Schutz gegen das ungewollte Ausschwemmen von Fett besteht dann, wenn die Eintauchtiefe der Auslauftauchwand so tief gewählt wird, dass deren Unterkante maximal 50mm über dem Boden des Beckens liegt.

Zugleich kann die Oberkante des Lenkmittels bzw. Blechs als seitliches Führungsmittel mit der Innenseite der Auslauftauchwand zusammenwirken, um die Wanne beim Einsetzen oder Anheben in ihrer horizontalen Lage zu stabilisieren.

Eine andere vorteilhafte Ausführungsform sieht vor, dass die Lenkmittel als beweglicher Rahmen ausgebildet sind. Dieser umläuft in einer Ruhelage den für die Ansammlung der aufschwimmenden Leichtstoffe vorgesehenen Bereich (Fettzone) zwischen den Tauchwänden bzw. den Seitenwänden des Abscheider-Beckens. Im Rahmen der Aufwärtsbewegung des Hubkastens wird der bewegliche Rahmen samt Fettschicht erfindungsgemäß von der Wanne erfasst und gemeinsam mit dieser aus dem Becken herausgehoben. Der bewegliche Rahmen bildet gleichsam eine die Fettschicht dauerhaft umlaufende seitliche Berandung, die in vertikaler Richtung beweglich sein soll. Im Rahmen der Aufwärtsbewegung der Wanne senkt sich der Rahmen (relativ gesehen) dabei bis in die Wanne und vorzugsweise bis auf deren Boden herab und bildet dabei ein vergrößertes Volumen, welches neben der Aufnahme der Schlammschicht nun auch zur Aufnahme der Fettschicht fungiert. Auch bei dieser Variante soll das zwischen den Schichten liegende Wasser möglichst vollständig verdrängt werden. Entsprechend erfolgt die Kontaktierung zwischen Hubkasten und Rahmen bei der Aufwärtsbewegung zweckmäßigerweise erst dann, wenn der niedrigste Wannenrand (bis zu dem dann die Wanne planmäßig mit Schlamm gefüllt ist) in eine Position auf gleicher Höhe oder oberhalb einer Unterkante des Rahmens gelangt ist. Besonders effektiv erfolgt die Verdrängung des Wasser dabei dann, wenn die im Rahmen aufgebaute Fettschicht bis an die Unterkante des Rahmens heranreicht, da Schmutzwasser dann nur unterhalb des Rahmens und oberhalb des niedrigsten Wannenrandes vorhanden ist bzw. leicht seitlich aus diesem Bereich verdrängt werden kann, insbesondere in die Ablaufzone. Die Funktion des Fettabscheiders mit beweglichem Rahmen könnte in etwa so beschrieben werden:
Zunächst ist die auf dem Boden des Beckens angeordnete Wanne mit einer Schlammschicht befüllt, die maximal die Höhe des niedrigsten Wannenrandes hat. In vertikaler Richtung oberhalb der Wanne ist innerhalb des eng an die Beckenkontur bzw. die Tauchbleche angepassten Rahmens die Fettschicht angeordnet, die zweckmäßigerweise die gesamte Höhe des Rahmens ausfüllt. Bei der Aufwärtsbewegung der Wanne wird das zwischen dieser und der Fettschicht bzw. der Unterkante des Rahmens verbliebene Schmutzwasser seitlich verdrängt, bis die Wanne so weit angehoben ist, dass ihr niedrigster Wannenrand auf Höhe der Unterkante des Rahmens liegt. Unter der Annahme, dass sich die Fettschicht bis zur Unterkante des Rahmens erstreckt und die Wanne bis zum niedrigsten Wannenrand mit Schlamm gefüllt ist, ist in diesem Moment das zwischen den Schichten liegende Wasser vollständig verdrängt. Je nach Ausführungsform kann die Wanne den Rahmen genau zu diesem Zeitpunkt kontaktieren, um ihn gemeinsam mit der Wanne nach oben zu bewegen. Denkbar ist aber auch, die Kontaktierung zwischen Wanne und Rahmen dadurch zu realisieren, dass der Rahmen mit seiner Unterkante bis auf den Boden der Wanne gelangt, um dann gemeinsam mit der Wanne herausgehoben zu werden. In diesem Fall würde die Fettschicht durch die darunter anliegende Schlammschicht evtl. relativ zum Rahmen noch etwas noch oben verschoben werden.

Beide Varianten zur Verwendung der Lenkmittel erleichtern die gleichzeitige Entnahme von Schlammschicht und Fettschicht zusätzlich, da ein relativer seitlicher Versatz bzw. ein Verrutschen der Fettschicht auf der Schlammschicht während der Entnahmebewegung und insbesondere auch oberhalb der Tauchbleche sicher vermieden wird.

Eine weitere vorteilhafte Ausführungsform der Erfindung sieht vor, dass sich die Schlammzone in Höhenrichtung tiefer erstreckt als die Einlauf- und die Auslaufzone. Dadurch werden Schlammansammlungen seitlich der Schlammzone vermieden, da der Tiefpunkt des Beckens im Bereich der Schlammzone liegt. Die Figurenbeschreibung wird dies anschaulich erläutern.

Eine zweckmäßige Gestaltung des Fettabscheiders sieht vor, dass Schlammzone, Fettzone und Wanne in der Draufsicht jeweils rechteckige, fluchtend übereinander liegende und im Wesentlichen identische Form haben. An den beiden Schmalseiten des Rechtecks schließt dabei die Einlaufzone bzw. Auslaufzone an, wobei beide Zonen gemeinsam mit der dazwischen liegenden Fett- bzw. Schlammzone in der Draufsicht die ebenfalls rechteckige Kontur des Beckens des Fettabscheiders bilden. Die die Schlammzone und Fettzone enthaltende Abscheidezone wird dabei durch die beiden gegenüberliegenden Längsseiten des Beckens quer zur Strömungsrichtung begrenzt. Die umlaufende Beckenwandung erstreckt sich allseitig bis oberhalb des zu erwartenden Wasserspiegels.

Durch die im Wesentlichen identische Kontur bzw. Form von Schlammzone, Fettzone und Wanne wird erfindungsgemäß sichergestellt, dass Fett und Schlamm möglichst vollständig von der Wanne erfasst und in einer Bewegung aus dem Becken herausgehoben werden kann.

Zur besonders sicheren Entnahme von Schlamm und Fett sieht eine weitere erfindungsgemäße Ausführungsform des Fettabscheiders vor, dass zwei gegenüberliegende Seitenränder der Wanne sich im Wesentlichen bis oberhalb des im Betrieb zu erwartenden Wasserspiegels (bspw. bis in Höhe des oberen Beckenrandes) und über eine Breite erstrecken, die vorzugsweise dem Abstand zwischen den Tauchblechen entspricht. Zweckmäßigerweise handelt es sich dabei um die zwei Seiten der Wanne, die im eingesetzten Zustand parallel und eng an den inneren Längsseiten des Beckens anliegen. Ein weiterer, die beiden gegenüberliegenden vorgenannten Seiten verbindender Wannenrand grenzt im eingesetzten Zustand der Wanne an die Einlaufzone und ist so ausreichend niedrig gestaltet, dass Wasser aus der Einlaufzone ohne besondere Strömungsstörungen in den Bereich oberhalb der Schlammzone bzw. der eingesetzten Wanne strömen kann. Auf der der Einlaufzone gegenüberliegenden Auslaufzone schließlich ist der bereits erwähnte niedrigste Wannenrand vorgesehen, der mit der Höhe seiner Oberkante das Füllvolumen der Wanne für die Schwerstoffe bestimmt.

Diese Gestaltung der Wanne erzwingt vorteilhaft, dass beim Ausheben der Wanne aus dem Becken das zwischen Schlammschicht und Fettschicht vorrätige Schmutzwasser nur in bzw. gegen die Fließrichtung des Wassers, also in Richtung der Einlaufzone oder der Auslaufzone verdrängt werden kann, da die beiden Seitenwände der Wanne bis oberhalb des Wasserspiegels gezogen sind. Gleichzeitig verhindern diese hohen Seitenwände ein Abgleiten der aufschwimmenden Fettschicht quer zur Strömungsrichtung des Schmutzwassers insbesondere dann, wenn anstelle von rahmenartigen Lenkmitteln um die Fettzone nur die im Bereich des niedrigsten Wannenrandes fest mit der Wanne verbundenen Lenkmittel zum Einsatz kommen.

Weitere vorteilhafte Ausführungsformen ergeben sich aus den Unteransprüchen.

Nachfolgend soll eine Ausführungsform der Erfindung anhand von Figurenbeispielen näher erläutert werden. Dabei zeigen
- Fig. 1: eine schematische Schnittdarstellung des erfindungsgemäßen Fettabscheiders in Betrieb, und
- Fig. 2: den Fettabscheider nach Fig. 1 mit herausgehobenem Hubkasten, und
- Fig. 3: einen gegenüber Fig. 1 leicht abgewandelten Fettabscheider mit größerem Lenkmittel.

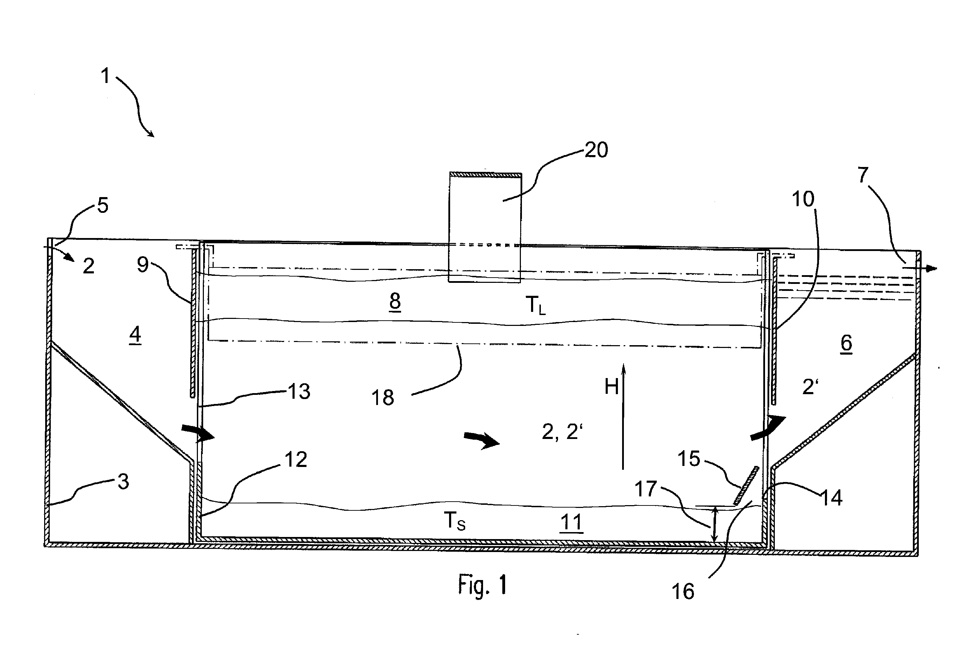

Fig. 1 zeigt einen Fettabscheider 1 in geschnittener Seitenansicht. Der Fettabscheider 1 umfasst ein nach oben vorzugsweise offenes Becken 3 mit in Draufsicht rechteckiger Struktur. Das Becken 3 umfasst eine Einlaufzone 4, in die zu reinigendes Schmutzwasser 2 durch einen Einlauf 5 einströmen kann. Auf der dem Einlauf 5 gegenüberliegenden Seite des Beckens 3 ist eine Auslaufzone 6 vorgesehen, aus der weitgehend gereinigtes Schmutzwasser 2' durch einen Auslauf 7 ausströmen kann. Das Becken 3 erstreckt sich in einer Höhenrichtung H nach oben, wobei Einlaufzone 4 und Auslaufzone 6 jeweils zur Mitte des Beckens 3 hin abfallende Böden aufweisen.

Zwischen Einlaufzone 4 und Auslaufzone 6 ist eine Abscheidezone vorgesehen, die in Längsrichtung des Beckens begrenzt wird durch ein an die Einlaufzone 4 angrenzendes vertikales Tauchblech 9 bzw. ein an die Auslaufzone 6 angrenzendes vertikales Tauchblech 10. Im oberen Bereich der Abscheidezone ist eine Fettzone 8 vorgesehen, in der sich aufschwimmende, aus dem Schmutzwasser 2 herauszutrennende Leichtstoffe T_{L} ansammeln sollen. Unterhalb der Fettzone 8 zwischen Einlauf- und Auslaufzone 4, 6 im mittleren Bodenbereich des Beckens 3 ist darüber hinaus eine Schlammzone 11 vorgesehen, in der sich aus dem Schmutzwasser 2 herabsinkende Schwerstoffe Tₛ in Form einer Schlammschicht ansammeln sollen.

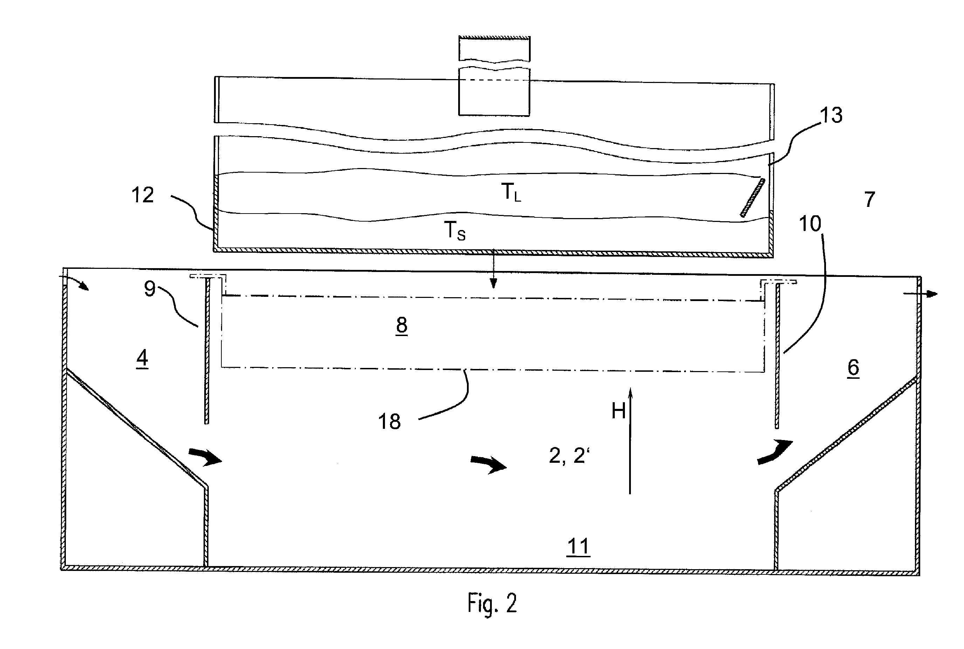

In die Abscheidezone ist von oben entgegen der Höhenrichtung H ein Hubkasten 13 eingesetzt, der in Fig. 2 auch getrennt in herausgehobener Stellung gezeigt ist. Der Hubkasten 13 umfasst an seinem unteren Bereich eine nach oben offene Wanne 12, die in etwa die seitlichen Abmaße der Schlammzone 11 hat. Die parallel zur Zeichenfläche verlaufenden Seitenwände der Wanne 12 bzw. des Hubkastens erstrecken sich bis hinauf zur Oberkante des Beckens 3 und schließen an einen Griff 20 an, über den der Hubkasten 13 in Höhenrichtung H nach oben aus dem Fettabscheider 1 herausgezogen bzw. in umgekehrter Richtung eingesetzt werden kann.

Die anderen beiden Seitenwände der Wanne 12 sind der Einlaufzone 4 bzw. der Auslaufzone 6 zugewandt und erstrecken sich nicht höher als bis zum unteren Ende der Einlaufzone 4 bzw. Auslaufzone 6. Insbesondere ist ein unterster, der Auslaufzone 6 zugewandter Wannenrand 14 vorgesehen, dessen Höhe das in der Wanne 12 aufnehmbare Volumen an Schwerstoffen Tₛ bestimmt. Weiterhin ist ein Lenkmittel in Form eines über die Breite der Wanne 12 (senkrecht zur Zeichenebene) verlaufenden Blechstreifens 15 zu erkennen. Der Streifen 15 ragt mit seinem unteren Ende bis auf eine Höhe 17 unterhalb des niedrigsten Wannenrandes 14 und hat zugleich zum niedrigsten Wannenrand 14 einen kleinen Abstand, wodurch eine Siphonöffnung 16 ausgebildet wird. Der Blechstreifen 15 dient dazu, die während des Anhebens des Hubkastens mit ihm in Berührung kommende obere Fettschicht aus Leichtstoffen T_{L} seitlich zu stabilisieren, so dass die Fettschicht nicht auf der Schlammschicht 11 aufschwimmend in den Bereich der Auslaufzone 6 abgleiten kann.

In Verbindung mit Fig. 2, in der nur einige Bezugszeichen erneut aufgeführt sind, lässt sich das Funktionsprinzip des erfindungsgemäßen Fettabscheiders wie folgt beschreiben:
Vor Inbetriebnahme des Fettabscheiders 1 wird der Hubkasten 13 mit der an seinem unteren Ende angeordneten Wanne 12 in das Becken 3 so weit abgesenkt, bis die Wanne 12 in der Schlammzone 11, also dem Bereich der zu erwartenden Schlammschicht, angeordnet ist. Nach Einströmen von Schmutzwasser 2 in die Einlaufzone 4 gelangt das Schmutzwasser 2 von dort unter dem Tauchblech 9 hindurch in die Abscheidezone, durchströmt diese im Wesentlichen horizontal und tritt von dort in gereinigter Form in die Auslaufzone 6, von wo es abgeführt werden kann.

Auf dem Weg durch die Abscheidezone trennen sich die Leichtstoffe T_{L} heraus und schweben aufwärts in die Fettzone 8, wo sie nach und nach eine Fettschicht ausbilden. Zugleich sinken die Schwerstoffe Tₛ gegen die Höhenrichtung H nach unten in die Schlammzone 11 und damit in die Wanne 12 herab, wo sich im Laufe der Zeit eine vorzugsweise bis zum unteren Wannenrand 14 reichende Schlammschicht aufbauen wird.

Zur Reinigung des Fettabscheiders wird der Hubkasten 13 in Höhenrichtung H vertikal nach oben angehoben. Die Schwerstoffe Tₛ verbleiben dabei in der Wanne 12, die sich langsam nach oben bewegt. Die zwischen den Tauchwänden 9 und 10 in der Fettzone 8 aufgebaute Fettschicht bleibt dabei zunächst an Ort und Stelle. Während sich die Schlammschicht bzw. Schlammzone 11 von unten auf die Fettschicht bzw. Fettzone 8 heraufbewegt, wird das dazwischen liegende Wasser seitlich herausgedrängt, beispielsweise in die Einlaufzone 4 oder die Auslaufzone 6. Schließlich wird die obere Fettschicht auf der unteren Schlammschicht aufliegen, wobei letzte dazwischen verbliebene Wasserreste durch die Siphonöffnung 16 unter dem Blechstreifen 15 hindurch nach außen gedrückt werden können. Zugleich werden die Leichtstoffe T_{L} der Fettschicht gegen seitliches Verrutschen durch das Lenkmittel 15 gesichert.

Auf diese Weise lassen sich Schwerstoffe und Leichtstoffe in einer einzigen Bewegung aus dem Fettabscheider gemeinsam entnehmen, so dass der Hubkasten separat und an geeigneter Stelle von beiden Stoffen gereinigt werden kann, um anschließend wieder in das Becken 3 des Fettabscheiders abgesenkt zu werden.

Eine alternative Ausführungsform zu dem Lenkmittel 15 ist in Fig. 1 und 2 in gestrichelter Darstellung als Rahmenkonstruktion 18 dargestellt. Der Rahmen 18 ruht durch flanschartige Vorsprünge auf den Tauchblechen 9 und 10 und umläuft die Fettzone 8, während er nach oben und unten offen ist. Während des Betriebes sammeln sich die aufschwebenden Leichtstoffe T_{L} in bekannter Weise innerhalb der Fettzone 8 und damit innerhalb des Rahmens 18 zu einer Fettschicht an.

Bei Anheben des Hubkastens, der bei Verwendung des Rahmens 18 auf das Lenkmittel 15 verzichten könnte, gelangt der Rahmen mit der Wanne 12 (vorzugsweise mit dem Wannenboden) in Kontakt und wird anschließend zusammen mit der Wanne 12 und der darin angesammelten Schlammschicht aufwärts aus dem Fettabscheider 1 herausgehoben. Durch geeignete Dimensionierung des Rahmens 18 in vertikaler Richtung bzw. Anschlagmittel an Wanne 12 oder Rahmen 18 kann sichergestellt werden, dass der Rahmen 18 vorzugsweise erst dann vertikal nach oben mit angehoben wird, wenn das zwischen Schlammschicht und Fettschicht angeordnete Wasser weitgehend verdrängt ist. Da der Rahmen 18 zweckmäßigerweise höher ist als der unterste Wannenrand 14 vermag die Wanne 12 im Moment der Kontaktierung mit dem Rahmen 18 zusätzliches Volumen, nämlich dasjenige der Fettschicht, mit aufzunehmen und gegen seitliches Verrutschen zusätzlich zu stabilisieren. Auch hierdurch lassen sich Schlammschicht und Fettschicht sicher und einfach aus dem Fettabscheider entfernen.

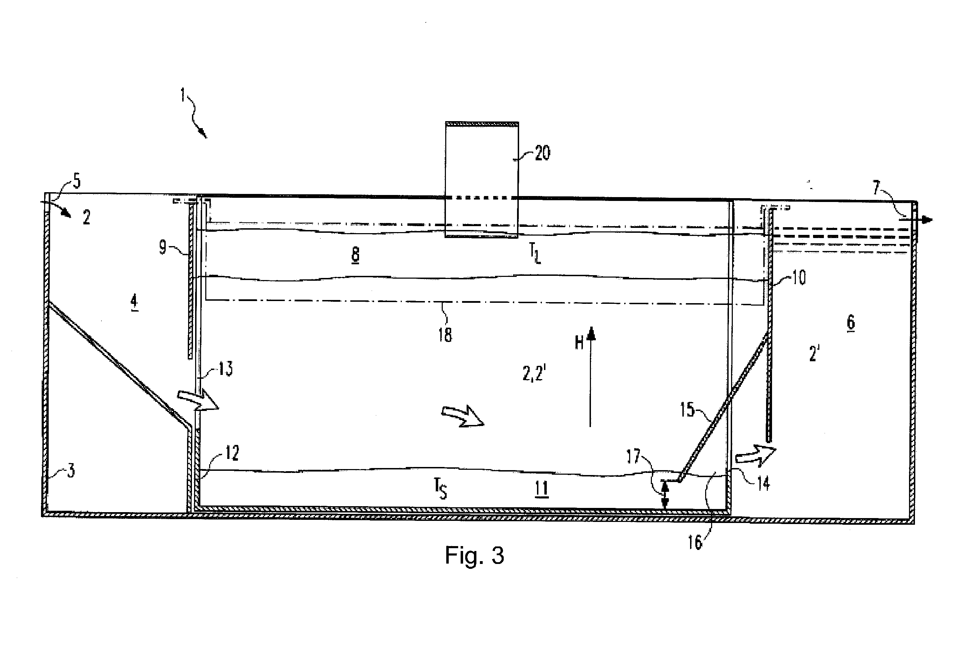

In Figur 3 ist - bei gleichen Bezugsziffern - eine leicht abgewandelte Form des Fettabscheiders zu sehen. Die Auslauftauchwand 10 ist gegenüber der Darstellung in Fig. 1 tiefer gezogen worden, in der Praxis bis auf ca. 50mm über den Boden des Beckens 3. Sie weist an ihrem unteren Ende auch einen horizontalen Abstand zum rechten (und gleichzeitig niedrigsten) Wannenrand 14 auf. Das als Blech ausgeführte Lenkmittel 15 wurde verlängert, ragt geneigt gegen die der Auslaufzone 6 abgewandte Seite der Auslauftauchwand 10 und bildet an seinem oberen Ende mit dieser einen Führungskontakt zur seitlichen Stabilisierung der Wanne 12 beim Einsetzen oder Entnehmen. Die Unterkante des Lenkblechs 15 liegt auf oder unter der Höhe des niedrigsten Wannenrandes 14, um einen Siphon in Richtung Auslaufzone 6 zu bilden. Zugleich hat das Lenkblech 15 vom niedrigsten Wannenrand 14 und von Boden der Wanne 12 einen so großen Abstand 17, dass beispielsweise eine Kugel mit einem Durchmesser von ca. 30mm aus der Wanne 12 durch den Siphon, zwischen Lenkblech 15 und Wannenrand 14 sowie zwischen Wannenrand 14 und Unterkante der Auslauftauchwand 10 hindurch in die Auslaufzone 6 bewegbar ist. Dadurch ist ein ausreichender Strömungsquerschnitt für den in den Fettabscheider eingespeisten Volumenstrom sichergestellt, während gleichzeitig durch die tiefer gezogene Auslauftauchwand 10 ein ungewollter Übertritt von Leichtstoffen wie Fett in die Auslaufzone 6 erschwert wird.

## Patentansprüche

1. Fettabscheider (1) zur Trennung von Schwerstoffen (Tₛ) und/oder Leichtstoffen (T_{L}) aus einer wässrigen Substanz (2), umfassend ein Becken (3), welches sich in einer vertikalen Höhenrichtung (H) nach oben erstreckt,
a) wobei das Becken (3) eine Einlaufzone (4) aufweist, in die die wässrige Substanz (2) durch einen in einer Einlaufhöhe angeordneten Einlauf (5) einströmt, und wobei das Becken (2) eine Auslaufzone (6) aufweist, aus der die gereinigte, wässrige Substanz (2') durch einen unterhalb der Einlaufhöhe auf einer Auslaufhöhe angeordneten Auslauf (7) ausströmt, und
b) wobei in Strömungsrichtung horizontal zwischen beiden Zonen (4, 6) eine Fettzone (8) zur Ansammlung aufschwimmender Leichtstoffe (T_{L}) vorgesehen ist, wobei die Fettzone (8) von beiden Zonen (4, 6) jeweils durch eine Einlauftauchwand (9) bzw. Auslauftauchwand (10) bis in die jeweilige Eintauchtiefe abgegrenzt ist, und
c) wobei in Höhenrichtung (H) unterhalb der Fettzone (8) und vorzugsweise deckungsgleich zu ihr eine Schlammzone (11) zur Ansammlung absinkender Schwerstoffe (Ts) vorgesehen ist,
**dadurch gekennzeichnet,**
d) **dass** ein in das Becken (3) absenkbarer, eine nach oben offene Wanne (12) umfassender Hubkasten (13) vorgesehen ist, der zur Entnahme der in der Schlammzone (11) und/oder Fettzone (8) angesammelten Schwer- und/oder Leichtstoffe (Tₛ, T_{L}) aus dem Becken (3) in Höhenrichtung (H) nach oben herausnehmbar ist,
e) wobei das Füllvolumen der Wanne für die Aufnahme von Schwerstoffen (Tₛ) oder wässriger Substanz (2) durch wenigstens einen niedrigsten Wannenrand (14) bestimmt wird.

2. Fettabscheider nach dem vorhergehenden Anspruch, **dadurch gekennzeichnet, dass** die Wanne (3) bis in den Bereich der Schlammzone (11) absenkbar ist, um die Schwerstoffe (Tₛ) in der Wanne (12) anzusammeln.

3. Fettabscheider nach einem der vorigen Ansprüche, **dadurch gekennzeichnet, dass** der Fettabscheider Lenkmittel (15) umfasst, die eine seitliche Bewegung der Leichtstoffe (T_{L}) während der Entnahme des Hubkasten (13), insbesondere oberhalb der Tauchwände (9, 10), behindert.

4. Fettabscheider nach dem vorhergehenden Anspruch, **dadurch gekennzeichnet, dass** die Lenkmittel (15, 18) zumindest im Bereich des niedrigsten Wannenrandes (14) als zusätzliche seitliche Berandung an der Wanne (12) angeordnet sind, so dass sich das Füllvolumen der Wanne (12) für die zusätzliche Aufnahme von Leichtstoffen (T_{L}) erhöht.

5. Fettabscheider nach dem vorhergehenden Anspruch, **dadurch gekennzeichnet, dass** die Lenkmittel (15) zumindest im Bereich des niedrigsten Wannenrandes (14) eine wasserdurchlässige Siphon-Öffnung (16) zwischen sich und dem niedrigsten Wannenrand (14) dadurch ausbilden, dass die zusätzliche Berandung bis auf eine Höhe (17) unterhalb des niedrigsten Wannenrandes (14) und leicht beabstandet zu diesem in die Wanne (12) herabragt.

6. Fettabscheider nach Anspruch 3, **dadurch gekennzeichnet, dass** sich ein der Auslaufzone (6) zugewandtes Lenkmittel (15) von einem Niveau unterhalb des niedrigsten Wannenrandes (14) bis oberhalb der Eintauchtiefe der Auslauftauchwand (10) erstreckt, um einen Schutz gegen ungewollten Austritt von Fett oder Schlamm in die Auslaufzone (6) zu bilden.

7. Fettabscheider nach dem vorhergehenden Anspruch, **dadurch gekennzeichnet, dass** das Lenkmittel (15) als Führungsmittel mit der der Auslaufzone (6) abgewandten Seite der Auslauftauchwand (10) zusammenwirkt, um die Wanne (12) beim Herausheben oder Absenken in horizontaler Richtung zu führen.

8. Fettabscheider nach Anspruch 3, **dadurch gekennzeichnet, dass** die Lenkmittel als beweglicher Rahmen (18) ausgebildet sind, der die Fettzone (8) zwischen den Tauchwänden (9, 10) in einer Ruhelage (19) umfasst und im Rahmen der Aufwärtsbewegung des Hubkastens (13) von diesem zur gemeinsamen Entnahme von Hubkasten samt Rahmen aus dem Becken (3) kontaktiert und mit einer Hubkraft beaufschlagt wird.

9. Fettabscheider nach dem vorhergehenden Anspruch, **dadurch gekennzeichnet, dass** die Kontaktierung zwischen Hubkasten (13) und Rahmen (18) erst erfolgt, wenn der niedrigste Wannenrand (14) bei der Aufwärtsbewegung des Hubkastens (13) in eine Position auf gleicher Höhe oder oberhalb einer Unterkante des Rahmens (18) gelangt ist.

10. Fettabscheider nach einem der vorigen Ansprüche, **dadurch gekennzeichnet, dass** ein freier Kugeldurchlauf für einen Kugeldurchmesser von 30mm besteht von der Einlaufzone (4) bis in die Auslaufzone (6).

11. Fettabscheider nach einem der vorigen Ansprüche, **dadurch gekennzeichnet, dass** Schlammzone (11), Fettzone (8) und Wanne (12) in der Draufsicht jeweils rechteckige, fluchtend übereinanderliegende und im Wesentlichen identische Form haben, wobei an den Schmalseiten des Rechtecks jeweils die Einlauf- bzw. Auslaufzone (4, 6) angrenzt.

12. Fettabscheider nach einem der vorigen Ansprüche, **dadurch gekennzeichnet, dass** sich zwei gegenüberliegende Seitenränder der Wanne (12) im eingesetzten Zustand jeweils bis oberhalb der Auslaufhöhe erstrecken, um den Auslauf der zwischen diesen Seitenrändern befindlichen wässrigen Substanz beim Anheben des Hubkastens auf den Bereich der Wanne (12) mit niedrigeren Seitenwänden zu beschränken.
